# EUROPEAN PATENT APPLICATION

(11) **EP 2 148 151 A2**
(43) Date of publication of application: **27.01.2010**
(21) Application number: 09490003.2
(22) Date of filing: 20.07.2009
(51) Int. Cl.: F24J 2/04, F24J 2/26, F24D 17/00

(54) **System for collecting solar radiation using a collecting surface made with structural elements which can be divided**

(30) Priority: 23.07.2008 SM 200800043
(71) Applicant: Mastertag S.A., 47896 Faetano (SM)
(72) Inventor: Rocchetti, Valter, 47900 Rimini (RI) (IT)

(57) **Abstract**

A system (1) for collecting solar radiation and exchanging the heat energy with heat storage means (2) comprises structural elements (3) which are connected to each other in such a way as to form a surface (4) suitable for collecting solar radiation. The structural elements (3) in turn comprise an active surface (5) for collecting and exchanging heat at least functionally divided into separate sections (5a, 5b), each section being designed to selectively exchange heat with the storage means (2) when a predetermined condition detected by suitable sensor means (6) occurs.

## Description

The present invention relates to technologies concerning the use of solar energy to heat a fluid.

More particularly, the invention relates to a system for collecting solar radiation for the exchange of the associated heat energy with a fluid and for subsequently conveying the heat carrier fluid towards suitable storage means; a system in which structural elements operate which are connected to each other in such a way as to form a surface suitable for collecting solar radiation.

There are prior art systems for heating a heat carrier fluid (for example water, serving a heating circuit, or a network for distribution of water for sanitary use) which use collecting panels consisting of structural elements that have active surfaces which absorb the solar irradiation heat, exchanging it with an underlying network of tubes connected to them. The fluid running through the network, suitably heated, then reaches a storage tank from which by means of suitable heat exchanges it is then transferred to the various user devices served.

Depending on the exposure and orientation of the panels belonging to the collecting surface, and depending on the angle of the panels relative to the positions of the sun at the various times of day, the heat yield of such panels is known to vary greatly.

Therefore, to prevent the panels - for example connected to the sloping plane of the roof which is in the shade or in any case exposed to less favourable orientations - from being able to introduce relatively cold water into the storage systems, which may therefore take away the heat already stored there, conventional systems equip the batteries of solar panels with valves which intercept the hydraulic connections with the storage means so as to prevent backward heat exchange from the storage means towards the panels.

Recently, in order to simultaneously save energy and safeguard the architectural value of certain types of building roofing, modular structural elements were made for collecting and exchanging heat, their geometry and dimensions similar to those of bent tiles for roofing. These elements, connected to each other as appropriate for conventional bent tiles, or even also connected to conventional bent tiles, allow building structures to be obtained which are active in heat collection and heat exchange, but which, unlike conventional solar panels, are perfectly integrated in the building structure even in terms of aesthetics.

Such panels in particular have active surfaces which, similarly to the bent tiles for roofing, have a semi-cylindrical shape with its convex part towards the sun and which contains below its concave part tubes through which there flows the heat carrier fluid to be heated by the solar energy striking the surface of the building structure.

Structural elements made in that way, although appreciable due to their pleasant appearance and their capacity for integration with conventional building structures, have the disadvantage of operating with reduced energy efficiency and, considering that in solar heating theoretical energy exchanges are of a low level, such reduced energy efficiency is a factor penalising the inexpensiveness and the advantage of a heating system made in that way.

Within the bent tile structure, the active surface of a generic structural element - due to its curvature - is particularly penalised when rays of sunlight strike it at a very oblique angle. Indeed, within the active surface of a bent tile the least exposed part of said surface takes away a share of the heat collected by the part which is in contrast more favourably exposed to the radiation, in this way lowering the overall heat yield of the structural element.

The main aim of the invention is therefore to overcome the above-mentioned disadvantages with a system having bent tile structural elements designed in such a way that they avoid the dissipation of energy by the less favoured surface and in such a way that they avoid feeding towards the storage means a fluid capable of reducing the temperature of the mass of fluid stored there.

Accordingly, the invention achieves said aim with a system whose technical features are clear from the content of the claims herein, in particular claim 1, and from any of the claims directly or indirectly dependent on claim 1.

The advantages of the present invention are also more apparent in the detailed description which follows, with reference to the accompanying drawings which illustrate a preferred, non-limiting embodiment of the invention, in which:
- Figure 1 is a schematic assembly view of building roofing with integrated elements of a system in accordance with the invention;
- Figure 2 is an enlarged schematic view of an element of the roofing of Figure 1;
- Figure 3 is a schematic illustration of the system indicating the operating principle.

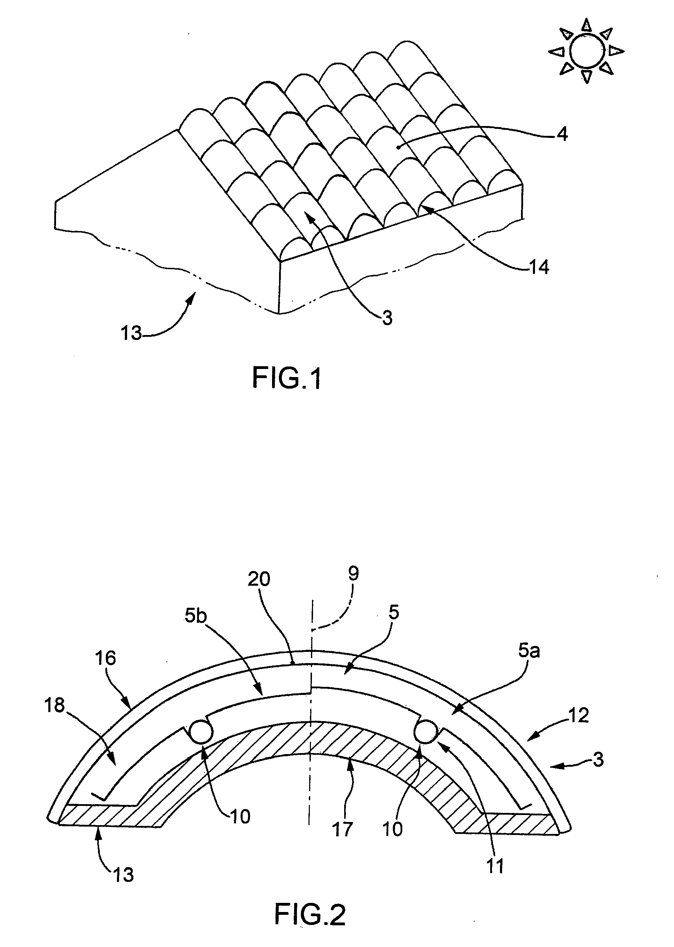

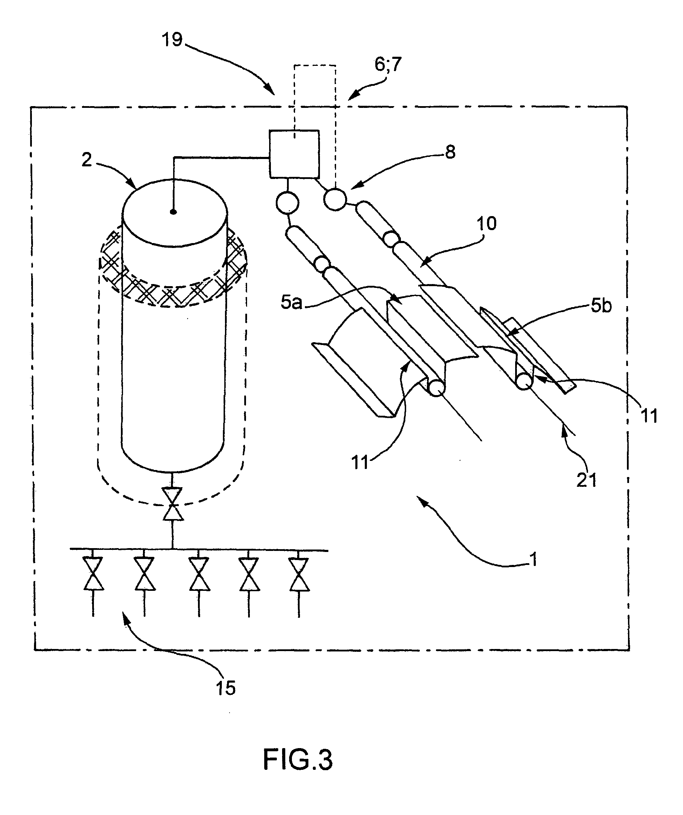

With reference to the accompanying drawings, Figure 1 shows a generic building 13 fitted with a system, illustrated as a whole in Figure 3 and labelled 1.

The system 1 is designed to be able to collect solar radiation striking a surface 4 suitably exposed to the sun, and to exchange the radiation's associated heat energy with heat storage means 2.

In the example described, the surface 4 is a roof 14 covering the building 13. The heat storage means 2 serve, for example, a system 15 for heating rooms and/or the water used for sanitary equipment.

The surface 4 for collecting solar radiation comprises a plurality of component structural elements 3, with modular shape and dimensions - for example having a shape similar to the bent tiles of conventional building roofing - and designed to be placed alongside each other so as to form, and/or integrate with, the building 13 roofing.

More particularly, Figure 2 shows how each structural element 3 has a substantially semi-cylindrical hollow shape, with two flat base surfaces 20 substantially having the shape of an arc of a circle.

The element 3 has a convex extrados lateral surface 16, exposed to the outside of the building 13; a concave intrados lateral surface 17, facing the inside of the building 13; and an inner cavity 18, delimited between the extrados and intrados surfaces 16, 17 and the two bases 20. The cavity 18 houses an active surface 5 - preferably divided into two sections 5a and 5b - for collecting solar heat and exchanging it with a heat carrier fluid circulating between the element 3 and the heat storage means 2.

The active surface 5, that is to say, the two sections 5a and 5b of which a preferred embodiment of it consists, is a thin sheet of material which is good at conducting heat (for example a copper alloy) and may be shaped in such a way that it is either substantially two-dimensional, in space, or three-dimensional as shown for example by the preferred embodiment of the invention described herein.

As shown in Figures 2 and 3, the active surface 5 has a shape similar to that of a building structure element designed in the shape of a bent tile.

Figures 2 and 3 also show how the two sections 5a and 5b of the active surface 5 are physically separate from each other, and symmetrical with one another relative to a structural element 3 centre line plane 9.

Each section 5a or 5b has seats 11 to which there are connected respective separate tubular conveying components 10, inside which the heat carrier fluid travels.

Each of the conveying components 10 belongs to a water circuit (only partly illustrated) which connects with the storage means 2 the corresponding sections 5a or 5b of suitably combined groups of elements 3. Said groups may be made with the most diverse grouping criteria. One possible criterion may be - for example - the water connection to a single conveying component 10 from the corresponding sections 5a or 5b of a row of elements 3 arranged in series along directions 21 which are longitudinal relative to the conveying components 10.

The sheets of heat conducting material used to make the individual sections 5a and 5b and the respective conveying components 10 are preferably connected to each other in such a way that they operate as a single body.

If the materials used to make them allow it, the conveying components 10 and the sheets used to make the sections 5a and 5b may be welded to each other.

Figure 2 also shows how the structural element 3 has, at the extrados surface 16, a wall 12 which is transparent to solar radiation, covering the active surface 5 (that is to say, its sections 5a and 5b) and for example made of a glassy material or a material having similar properties, or even made of lenses which concentrate the solar radiation striking the wall.

At the intrados surface 17, the structural element comprises an opaque, heat insulating wall 13, located behind the active surface 5 and the respective sections 5a and 5b.

In practice, the separate sections 5a and 5b of the active surface 5 are able to exchange heat with the storage means 2, selectively, and only when a predetermined condition occurs, which is detected by suitable sensor means 6. The sensor means 6 consist, in particular, of suitably positioned temperature detectors 7 which directly detect (if necessary also measuring it) the local temperature of the sections 5a or 5b or the temperature of the fluid at and close to them.

The system 1 also comprises control means 19 which, operating between the temperature detectors 7 and hydraulic connections 8 positioned on the conveying components 10, open or close fluid transit between the storage means 2 and the sections 5a and 5b of the structural elements 3 according to the difference in heat existing, detected instantaneously, and according to the sign of said difference.

Transit of the fluid of the sections 5a and 5b is only allowed towards the storage means 2 and only when the instantaneous temperature of the fluid behind the sections 5a and/or 5b is higher than the temperature of the fluid contained in the storage means 2.

Operating in that way, the system 1 gives a high level of heat efficiency because, during the hours when the sun is far from the zenith position, or far from the line perpendicular to the sloping plane of the roof 14, heat collection and exchange are carried out only by the sections 5a and 5b most favourably exposed without the possibility of the energy benefits acquired being penalised by the low or insufficient temperature condition of the heat carrier fluid associated with the sections that are in the shade or with the sections that are not adequately exposed to the sun.

Moreover, since the total mass of fluid to be heated by the heat is at least halved in two independent circuits, (obviously converging in an operating fashion towards the same storage means 2) the heating transients are at least halved, and the availability of hot water is correspondingly more immediate.

The invention achieves the aims indicated, allowing highly efficient solar systems to be obtained; which can be suitably used for a greater number of hours throughout the day and for more days per year.

The construction solutions possible, with relatively simple and inexpensive construction, allow lasting, reliable system duration.

Finally, said operating and economic advantages accompany the possibility of favouring architectural construction solutions valuable even in terms of aesthetics and the environment.

The invention described above is susceptible of industrial application and may be modified and adapted in several ways without thereby departing from the scope of the inventive concept. Moreover, all details of the invention may be substituted by technically equivalent elements.

## Claims

1. A system for collecting solar radiation and exchanging the heat energy with heat storage means (2), comprising structural elements (3) which are connected to each other in such a way as to form a surface (4) designed to collect solar radiation, the system being **characterised in that** at least one structural element (3) comprises an active surface (5) for collecting and exchanging heat at least functionally divided into separate sections (5a, 5b), each section being designed to selectively exchange heat with the storage means (2) when a predetermined condition detected by suitable sensor means (6) occurs.

2. The system according to claim 1, **characterised in that** the sensor means (6) comprise detectors (7) for the temperature reached by each of the sections (5a, 5b), the system (1) comprising control means (19) designed to selectively intercept hydraulic connections (8), being operatively inserted between the storage means (2) and the sections (5a, 5b), according to the difference in heat existing between the storage means (2) and each of the sections (5a and 5b).

3. The system according to either of the foregoing claims, **characterised in that** the active surface (5) has a substantially two-dimensional shape.

4. The system according to any of the foregoing claims, **characterised in that** the active surface (5) has a three-dimensional shape in space.

5. The system according to claim 3 or 4, **characterised in that** the active surface (5) is shaped in such a way that it is similar to a building structure element.

6. The system according to claim 5, **characterised in that** the active surface (5) is shaped like a bent tile and the building structure comprises building roofing (14).

7. The system according to any of the foregoing claims, **characterised in that** at least two of the sections (5a, 5b) of the active surface (5) of the structural element (3) are physically separate from each other.

8. The system according to claim 7, **characterised in that** the sections (5a, 5b) are substantially symmetrical with each other relative to a structural element (3) centre line plane (9).

9. The system according to any of the foregoing claims, **characterised in that** the sections (5a, 5b) are connected to separate conveying components (10), inside which a heat carrier fluid travels.

10. The system according to any of the foregoing claims, **characterised in that** the active surface (5) comprises a material which is good at conducting heat.

11. The system according to claims 9 and 10, **characterised in that** the sheet of heat conducting material and the conveying components (10) are connected in such a way that they substantially operate as a single body.

12. The system according to claim 11, **characterised in that** the surface (5; 5a, 5b) comprises seats (11) for housing the conveying components (10).

13. The system according to any of the foregoing claims, **characterised in that** the one or each structural element (3) comprises a wall (12) which is transparent to solar radiation, covering the active surface (5).

14. The system according to claim 13, **characterised in that** the structural element (3) comprises a heat insulating wall (13) located behind the active surface (5).

15. The system according to claim 13, **characterised in that** the transparent wall (12) is made of a glassy material or of a similar material.

16. The system according to claim 13 or 15, **characterised in that** the transparent wall (12) comprises lenses designed to concentrate the solar radiation on the sections (5a, 5b).

17. A structural roofing element **characterised in that** it is made according to any of the foregoing claims.

18. Building roofing, **characterised in that** it comprises at least one structural element (3) made according to any of the foregoing claims.
